# FASCICULE DE BREVET EUROPEEN

(11) **EP 3 068 599 B1**
(45) Date de publication et mention de la délivrance du brevet: **13.03.2019**
(21) Numéro de dépôt: 14809454.3
(22) Date de dépôt: 03.11.2014
(51) Int. Cl.: B29B 11/14, B29B 11/08, B29C 49/00, B29C 49/06, B29C 49/08

(54) **PREFORME A FOND ETOILE ET RECIPIENT CORRESPONDANT**
VORFORM MIT STERNFÖRMIGEM BODEN UND ENTSPRECHENDER BEHÄLTER
PREFORM HAVING A STAR-SHAPED BOTTOM AND CORRESPONDING CONTAINER

(30) Priorité: 14.11.2013 FR 1361104
(43) Date de publication de la demande: 21.09.2016
(73) Titulaire: Société d'Exploitation des Sources Roxane, 61420 La Ferrière Bochard (FR)
(72) Inventeur: TEXIER, Stéphane, F-03270 St Yorre (FR)
(74) Mandataire: Novagraaf Technologies
(86) Numéro de dépôt international: PCT/FR2014/052788
(87) Numéro de publication internationale: WO 2015/071569

(56) Documents cités:
- WO-A1-91/00220
- WO-A1-2011/056176
- DE-A1-102012 004 613
- FR-A1- 2 724 588
- US-A- 5 047 271
- US-A- 5 160 059
- US-A1- 2013 134 124

## Description

### 1. Domaine de l'invention

L'invention concerne le domaine de l'embouteillage. En particulier, l'invention concerne des récipients en plastique obtenus typiquement par soufflage ou étirage-soufflage à partir d'une préforme.

### 2. Art antérieur

US5160059, US2013134124, WO2011056176, WO9100220, US5047271 et DE102012004613 divulguent des préformes et des récipients obtenus par soufflage de préformes.

FR2724588 divulgue une préforme selon le préambule de la revendication 1 et des récipients obtenus par soufflage d'une préforme selon le préambule de la revendication 1.

Les récipients en plastique sont obtenus par soufflage ou étirage-soufflage de préformes ayant été moulées par injection et par moulage d'un matériau plastique. Ce matériau est typiquement un polymère tel qu'un poly(téréphtalate d'éthylène) (PET). Une telle préforme comprend une partie de corps qui s'étend suivant un axe longitudinal et qui est reliée via une périphérie de fond à une partie de fond fermée. La partie de corps comprend généralement une paroi dont l'épaisseur est identique à celle de la paroi de la partie de fond.

Depuis plusieurs années, les préformes ont été agencées de telle sorte que le poids des récipients obtenus à partir de celles-ci soit de plus en plus allégé. Il reste donc difficile aujourd'hui d'identifier d'autres moyens pour alléger le poids des préformes et des récipients sans que ceux-ci perdent en résistance mécanique.

### 3. Objectifs de l'invention

Un objectif de l'invention est donc de fournir un récipient permettant un gain de poids, notamment dans le fond de celui-ci à partir d'une préforme dont le fond est perfectionné et cela sans impacter la résistance du récipient.

Un autre objectif de l'invention est de proposer une solution qui soit simple, universelle et peu coûteuse.

### 4. Résumé de l'invention

Ces objectifs sont atteints grâce à une préforme pour récipient en plastique, la préforme comprenant une partie de corps comprenant une paroi présentant une épaisseur, qui s'étend suivant un axe longitudinal et qui est reliée via une périphérie à une partie de fond fermée présentant un sommet, la préforme étant remarquable en ce que la partie de fond présente des nervures s'étendant chacune depuis le sommet de la partie de fond vers la périphérie pour former une étoile et en ce qu'une zone sensiblement triangulaire agencée entre deux nervures adjacentes et une portion de la périphérie présente une épaisseur inférieure à l'épaisseur de la paroi de la partie de corps.

Ainsi, la configuration de la partie de fond d'une telle préforme permet un gain de poids de la préforme et par conséquent un gain de poids du récipient fabriqué à partir de cette préforme tout en gardant de la résistance mécanique. En effet, le gain de poids est obtenu en enlevant de la matière dans la partie de fond de la préforme aux endroits qui ne participent pas à la résistance mécanique du fond du récipient. Une telle préforme munie de ces zones sensiblement triangulaires d'épaisseur réduite permet d'obtenir un gain de poids de l'ordre de 1% à 5% du poids total d'une préforme standard.

Plus précisément, chaque nervure comprend une épaisseur supérieure à l'épaisseur de chaque zone sensiblement triangulaire. Cela est due à la nécessité d'avoir une répartition uniforme de la matière plastique vers le col de la préforme.

De manière avantageuse, l'épaisseur de la zone sensiblement triangulaire varie du sommet de la partie de fond vers la périphérie. Ainsi, plus l'épaisseur de la zone sensiblement triangulaire est réduite au voisinage du point d'injection, plus le gain de poids est important, tout en gardant une épaisseur suffisante pour assurer la répartition de la matière plastique et de la résistance mécanique.

Dans le même but que précédemment, la zone sensiblement triangulaire présente une épaisseur qui est minimale au voisinage du sommet de la partie de fond.

Afin de permettre une meilleure répartition de la matière plastique depuis le sommet de la partie de fond vers un col de la préforme, l'épaisseur de chaque nervure varie du sommet de la partie de fond vers la périphérie.

De manière avantageuse, chaque nervure fait saillie à l'intérieur de la partie du fond. Une telle configuration, à savoir, la modification de la partie interne de la partie de fond de la préforme, permet la modification que d'une seule partie (le noyau) du moule dans lequel la préforme est réalisée. Cela apporte un gain économique dans la fabrication de la préforme.

De manière préférée, la préforme comprend trois, quatre ou cinq nervures pour former l'étoile. Une telle configuration permet d'obtenir des zones sensiblement triangulaires avec une surface suffisamment importante et dont l'épaisseur peut être réduite afin d'optimiser le gain de poids.

La partie de fond de la préforme peut présenter une section conique ou sphérique.

L'invention concerne également un récipient en matière plastique obtenu par soufflage d'une préforme présentant les caractéristiques telles que susmentionnées.

Selon l'invention, un tel récipient comprend un corps s'étendant suivant l'axe longitudinal et un fond fermé prolongeant le dudit corps, le fond comprenant une assise définissant un plan de pose et un sommet.

### 5. Liste des figures

D'autres caractéristiques et avantages innovants ressortiront de la description ci-après, fournie à titre indicatif et nullement limitatif, en référence aux dessins annexés, dans lesquels :
- la figure 1 représente une préforme selon l'invention;
- la figure 2 représente un récipient pouvant être obtenu à partir de la préforme selon l'invention par une opération de soufflage ou d'étirage-soufflage ;
- la figure 3 illustre schématiquement une vue en coupe selon I-I de la partie inférieure de la préforme selon la figure 1 ; et,
- la figure 4 est vue de dessous de la préforme selon la figure 1.

### 6. Description détaillée

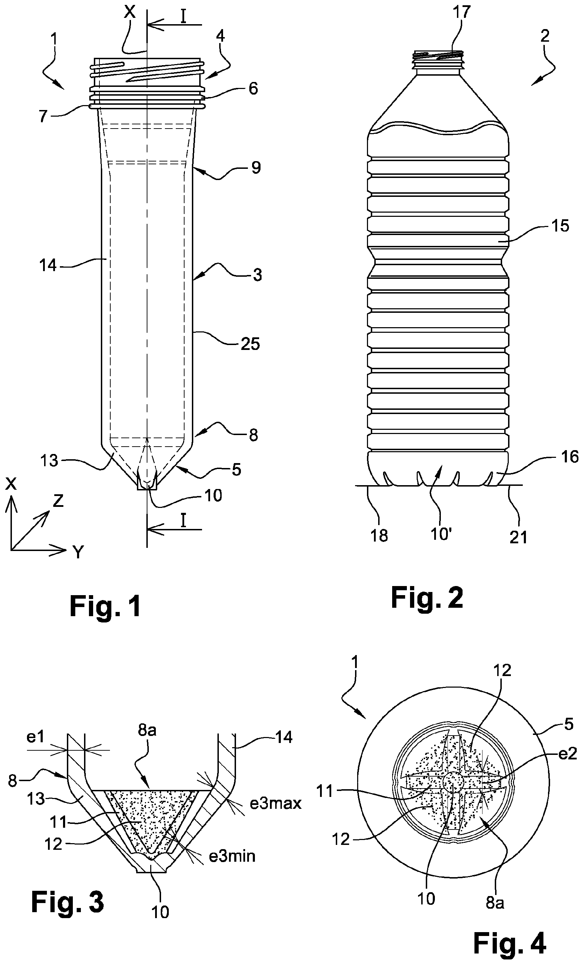

Sur la figure 1 est représentée une préforme 1 à partir de laquelle sera fabriqué un modèle de récipient 2 tel que représenté par exemple sur la figure 2. La préforme 1 est réalisée par injection d'un matériau polymère dans un moule. Le matériau polymère est de manière connu un thermoplastique tel que le poly(téréphtalate d'éthylène) (PET).

Dans la suite de la description, pour faciliter encore la compréhension de l'invention, on considère que la préforme 1 comprend une partie de corps 3 qui s'étend suivant une direction longitudinale, verticale, X. Est également représentée la direction transversale Y qui est perpendiculaire à la direction longitudinale X et à une direction horizontale Z de sorte que ces trois directions X, Y, Z forment un repère orthogonal direct tel qu'illustré sur la figure 1.

Les termes « inférieur », « supérieur » sont définis par rapport à la direction longitudinale verticale X.

La partie de corps 3 de la préforme 1 présente une forme cylindrique. Celle-ci 3 s'étend entre un col 4 ou goulot situé en partie supérieure et une partie de fond 5 fermée en partie inférieure. Le col 4 est relié à la partie de corps via une jonction 9 et présente un pas de vis 6 extérieur et une collerette d'accrochage 7. La partie de fond 5 est reliée à la partie de corps 3 via une périphérie 8. La partie de fond 5 comprend également une paroi 13 et un sommet 10 traversé par la direction X. Ce sommet 10 correspond au point d'injection de la matière plastique dans le moule pour former la préforme 1. La partie de fond 5 présente ici une section conique.

La partie de corps 3 présente une paroi 14 ayant une épaisseur el constante entre la périphérie 8 et la jonction 9. Cette épaisseur el de la paroi de la partie de corps 3 va dépendre de la forme et des dimensions du récipient 2 que l'on veut obtenir.

Comme on peut le voir en particulier sur les figures 3 et 4, la partie de fond 5 présente des nervures 11 qui s'étendent chacune depuis le sommet 10 de la partie du fond 5 vers la périphérie 8 pour former une étoile. Plus précisément, les nervures 11 présentent une longueur sensiblement égale à celle de la paroi 13 de la partie de fond 5 de sorte que le plastique se répartisse de manière uniforme et aisément depuis le sommet 10, point d'injection du plastique, vers le col 4 de la préforme 1. En effet, ces nervures 11 permettent de canaliser le plastique du sommet 10 vers le col 4. Ici, les nervures 11 font saillies à l'intérieur de la partie de fond 5. La préforme 1 présente également une surface externe 25 qui est continue depuis la partie de corps 3 vers la partie de fond 5. La surface externe 25 continue permet de conserver la forme et l'agencement des différentes parties constituant une partie du moule « externe » ce qui implique une garantie dans la suite des autres étapes de fabrication, conditionnement, acheminement des préformes, des machines de soufflage-étirage, etc.

Les nervures 11 sont disposées régulièrement et/ou de manière équidistante dans la partie de fond 5 de la préforme 1 autour du sommet 10. Les nervures 11 présentent chacune une épaisseur e2 voisine à l'épaisseur el de la paroi 14 de la partie de corps 3 ; c'est à dire sensiblement inférieure ou égale. De la sorte, il n'y a pas d'angle vif au niveau de la périphérie 8, à savoir, entre la paroi 14 de la partie de corps 3 et la paroi 13 de la partie de fond 5.

Selon l'invention, une zone 12 sensiblement triangulaire est agencée entre deux nervures 11 adjacentes et une portion 8a de la périphérie 8 dans la partie de fond 5. Tel qu'illustré sur la figure 4, il y a quatre nervures 11 agencées dans la partie de fond 5. Il en résulte donc quatre zones 12 sensiblement triangulaires agencées dans la partie de fond 5. Toutefois, la partie de fond 5 peut comprendre trois ou encore cinq nervures réparties régulièrement et/ou de manière équidistante en fonction des dimensions des préformes. Chaque zone 12 sensiblement triangulaire présente une épaisseur e3 inférieure à l'épaisseur el de la paroi 14 de la partie de corps 3 afin de permettre un gain de poids.

Nous voyons sur la figure 3, que l'épaisseur de la zone 12 sensiblement triangulaire varie du sommet 10 de la partie de fond 5 vers la périphérie 8. En particulier, l'épaisseur de la zone 12 est croissante du sommet 10 à la périphérie 8. En d'autres termes, la zone triangulaire présente une épaisseur e3ₘᵢₙ qui est minimale au voisinage du sommet 10 et une épaisseur e3ₘₐₓ qui est maximale au voisinage de la périphérie 8. Avantageusement, l'épaisseur e3 de la zone 12 sensiblement triangulaire est également inférieure à l'épaisseur e2 des nervures 11.

L'invention concerne également un récipient 2 tel qu'illustré sur la figure 2. Ce récipient 2 est obtenu de manière connue par un procédé de soufflage ou d'étirage-soufflage dans une machine de soufflage - étirage à partir de la préforme 1 présentant les caractéristiques susmentionnées.

Le récipient 2 comprend un corps 15 cylindrique s'étendant suivant la direction longitudinal X, un fond 16 fermé prolongeant le corps 15 en partie inférieure et un col 17 agencé en parte supérieure. Le col 4 de la préforme 1 présente une forme et une dimension qui ne varient pas lors de la formation du récipient 2 à partir de la préforme 1 et correspond au col 17 du récipient 2. La partie de corps 3 correspond au corps 14 du récipient et la partie de fond 5 correspond à une partie du fond 16 après l'opération de soufflage ou d'étirage-soufflage. Le fond 16 comprend une assise 18 définissant un plan de pose 21. La périphérie 8 de la préforme 1 correspondra en partie à l'assise 18 du récipient 2 après l'opération de soufflage. L'assise 18 se présente sous la forme d'un anneau dont le centre est défini par le sommet 10' et qui comporte une surface sensiblement plane de sorte que le récipient 2 repose de manière stable sur une surface plane. L'assise 18 définit sensiblement la périphérie du fond du récipient 2. Le sommet 10 de la partie de fond 5 correspond également au sommet 10' du fond 16 du récipient 2. Ainsi, le récipient 2 en plastique obtenu à partir de la préforme 1 selon l'invention présente un gain de poids compris entre 1 et 5% par rapport à un récipient réalisé à partir d'une préforme standard. En effet, le poids de la préforme 1 est identique au poids du récipient correspondant.

L'invention est décrite dans ce qui précède à titre d'exemple.

## Revendications

1. Préforme (1) pour récipient (2) en plastique, la préforme (1) comprenant une partie de corps (3) comprenant une paroi (14) d'épaisseur (e1) qui s'étend suivant un axe longitudinal (X) et qui est reliée via une périphérie (8) à une partie de fond (5) fermée présentant un sommet (10), la partie de fond (5) présentant des nervures (11) s'étendant chacune depuis le sommet (10) de la partie de fond (5) vers la périphérie (8) pour former une étoile,
ladite préforme étant **caractérisée en ce qu'**une zone (12) sensiblement triangulaire agencée entre deux nervures (11) adjacentes et une portion (8a) de la périphérie (8) présente une épaisseur (e3) inférieure à l'épaisseur (e1) de la de la paroi (14).

2. Préforme (1) selon la revendication 1, **caractérisée en ce que** chaque nervure (11) comprend une épaisseur (e2) supérieure à l'épaisseur (e3) de chaque zone (12) sensiblement triangulaire.

3. Préforme (1) selon la revendication 1 ou 2, **caractérisée en ce que** l'épaisseur (e3) de la zone (12) sensiblement triangulaire varie du sommet (10) de la partie de fond (5) vers la périphérie (8).

4. Préforme (1) selon la revendication 3, **caractérisée en ce que** la zone (12) sensiblement triangulaire présente une épaisseur (e3ₘᵢₙ) qui est minimale au voisinage du sommet (10) de la partie de fond (5).

5. Préforme (1) selon l'une des revendications 1 à 4, **caractérisée en ce que** l'épaisseur (e2) de chaque nervure (11) varie du sommet (10) de la partie de fond (5) vers la périphérie (8).

6. Préforme (1) selon l'une des revendications 1 à 5, **caractérisée en ce que** chaque nervure (11) fait saillie à l'intérieur de la partie du fond (5).

7. Préforme (1) selon l'une des revendications 1 à 6, **caractérisée** en en ce qu'elle comprend trois, quatre ou cinq nervures (11) formant l'étoile.

8. Préforme (1) selon l'une quelconque de revendications précédentes, **caractérisée en ce que** la partie de fond (5) présente une section conique ou sphérique.

9. Récipient (2) en matière plastique obtenu par soufflage ou étirage-soufflage d'une préforme (1) selon l'une quelconque des revendications 1 à 8, le récipient (2) comprenant un corps (15) s'étendant suivant l'axe longitudinal (X) et un fond (16) correspondant au fond (5) de la préforme (1) et étant fermé prolongeant le dudit corps (15), le fond (16) comprenant une assise (18) définissant un plan de pose (21) et un sommet (10').

## Patentansprüche

1. Rohling (1) für einen Kunststoffbehälter (2), wobei der Rohling (1) einen Körperteil (3) umfasst, der eine Wand (14) einer Dicke (e1) umfasst, die sich entlang einer Längsachse (X) erstreckt und die über einen Umfang (8) mit einem geschlossenen Bodenteil (5) verbunden ist, welcher eine Spitze (10) aufweist, wobei der Bodenteil (5) Rippen (11) aufweist, die sich jede ab der Spitze (10) des Bodenteils (5) zum Umfang (8) hin erstrecken, um einen Stern zu bilden,
wobei der Rohling **dadurch gekennzeichnet ist, dass** ein im Wesentlichen dreieckiger Bereich (12), der zwischen zwei aneinandergrenzenden Rippen (11) und einem Abschnitt (8a) des Umfangs (8) eingerichtet ist, eine Dicke (e3) aufweist, die kleiner als die Dicke (e1) der Wand (14) ist.

2. Rohling (1) nach Anspruch 1, **dadurch gekennzeichnet, dass** jede Rippe (11) eine Dicke (e2) umfasst, die größer ist als die Dicke (e3) jedes im Wesentlichen dreieckigen Bereichs (12).

3. Rohling (1) nach Anspruch 1 oder 2, **dadurch gekennzeichnet, dass** die Dicke (e3) des im Wesentlichen dreieckigen Bereichs (12) von der Spitze (10) des Bodenteils (5) zum Umfang (8) hin variiert.

4. Rohling (1) nach Anspruch 3, **dadurch gekennzeichnet, dass** der im Wesentlichen dreieckige Bereich (12) eine Dicke (e3ₘᵢₙ) aufweist, die in der Nähe der Spitze (10) des Bodenteils (5) minimal ist.

5. Rohling (1) nach einem der Ansprüche 1 bis 4, **dadurch gekennzeichnet, dass** die Dicke (e2) jeder Rippe (11) von der Spitze (10) des Bodenteils (5) zum Umfang (8) hin variiert.

6. Rohling (1) nach einem der Ansprüche 1 bis 5, **dadurch gekennzeichnet, dass** jede Rippe (11) ins Innere des Bodenteils (5) hineinragt.

7. Rohling (1) nach einem der Ansprüche 1 bis 6, **dadurch gekennzeichnet, dass** er drei, vier oder fünf Rippen (11) umfasst, die den Stern bilden.

8. Rohling (1) nach einem der vorstehenden Ansprüche, **dadurch gekennzeichnet, dass** der Bodenteil (5) eine kegelförmige oder kugelförmige Sektion aufweist.

9. Behälter (2) aus Kunststoffmaterial, der durch Blasen oder Streckblasen eines Rohlings (1) nach einem der Ansprüche 1 bis 8 erhalten wird, wobei der Behälter (2) einen Körper (15) umfasst, der sich entlang der Längsachse (X) erstreckt, und einen Boden (16), der dem Boden (5) des Rohlings (1) entspricht und den Körper (15) verlängernd geschlossen ist, wobei der Boden (16) eine Basis (18) umfasst, die eine Auflageebene (21) und eine Spitze (10') definiert.

## Claims

1. Preform (1) for a container (2) made of plastic, the preform (1) comprising a body part (3) comprising a wall (14) with a thickness (e1) which extends along a longitudinal axis (X) and which is connected via a periphery (8) to a closed bottom part (5) including an apex (10), the bottom part (5) having ribs (11) each extending from the apex (10) of the bottom part (5) to the periphery (8) to form a star, said preform being **characterised in that** a substantially triangular zone (12) arranged between two adjacent ribs (11) and a portion (8a) of the periphery (8) has a thickness (e3) that is less than the thickness (e1) of the wall (14).

2. Preform (1) according to claim 1, **characterised in that** each rib (11) has a thickness (e2) that is greater than the thickness (e3) of each substantially triangular zone (12).

3. Preform (1) according to claim 1 or 2, **characterised in that** the thickness (e3) of the substantially triangular zone (12) varies from the apex (10) of the bottom part (5) to the periphery (8).

4. Preform (1) according to claim 3, **characterised in that** the substantially triangular zone (12) has a thickness (e3ₘᵢₙ) that is minimal in the vicinity of the apex (10) of the bottom part (5).

5. Preform (1) according to any of claims 1 to 4, **characterised in that** the thickness (e2) of each rib (11) varies from the apex (10) of the bottom part (5) to the periphery (8).

6. Preform (1) according to any of claims 1 to 5, **characterised in that** each rib (11) protrudes inside the bottom part (5).

7. Preform (1) according to any of claims 1 to 6, **characterised in that** it comprises three, four or five ribs (11) forming the star.

8. Preform (1) according to any of the preceding claims, **characterised in that** the bottom part (5) has a conical or spherical cross section.

9. Container (2) made from plastic material obtained by blow moulding or stretch blow moulding a preform (1) according to any of claims 1 to 8, the container (2) comprising a body (15) extending along the longitudinal axis (X) and a bottom (16) corresponding to the bottom (5) of the preform (1) and being closed, extending said body (15), the bottom (16) comprising a base (18) defining a positioning surface and an apex (10').
